# EUROPEAN PATENT APPLICATION

(11) **EP 1 667 006 A1**
(43) Date of publication of application: **07.06.2006**
(21) Application number: 05394034.2
(22) Date of filing: 05.12.2005
(51) Int. Cl.: G05G 1/12, F16K 31/60

(54) **A radiator valve cap**

(30) Priority: 03.12.2004 IE 20040815
(71) Applicant: Excel Distribution Limited, Dublin 15 (IE)
(72) Inventor: Hope, Stephen, Waterlooville, Hampshire PO8 0YL (GB)
(74) Representative: Schütte, Gearoid

(57) **Abstract**

A radiator valve cap (1) for a central heating radiator valve (2) of the type having a valve body (3) with a valve spindle (4) projecting outwardly of the valve body (3), the spindle (4) being rotatable to open and close a stop valve housed within the valve body (3) to control the flow of heating fluid through a central heating radiator on which the radiator valve (2) is mounted. The radiator valve cap (1) includes a spindle gripping means (7) which is manually adjustable to allow fitting of the valve cap (1) on different sized spindles (4). Thus the valve cap (1) can be used with a variety of different radiator valves (2). The spindle gripping means (7) may comprise a pair of movable jaws (16) mounted within the valve cap (1) which are movable between an open release position and a closed spindle gripping position.

## Description

The invention relates to a radiator valve cap.

The invention is particularly concerned with radiator valve caps for a radiator valve of the type comprising a valve body with a valve spindle rotatably mounted on the valve body and projecting outwardly of the valve body, the spindle carrying a valve which co-operates with a complementary valve seat within the valve body. The spindle is rotatable on the valve body for opening and closing the valve. Usually a valve cap sits on the outer end of the spindle and is manually operable to open and close the valve. Typically an outer end of the valve spindle has an opposed pair of flats cut into the outer end and a complementary slot of similar shape is provided within the cap for engagement with the end of the spindle and allow rotation of the spindle by turning the cap. Very often these radiator valve caps become damaged or lost and need to be replaced. This presents a problem in that a wide variety of spindle sizes are used by the various valve manufacturers. One generally has to obtain a radiator valve cap produced specifically for the particular radiator valve. These are not always readily available.

The present invention is directed towards overcoming these problems.

According to the invention there is provided a radiator valve cap for a radiator valve of the type comprising a valve body with a valve spindle rotatably mounted on the valve body and projecting outwardly therefrom, said spindle carrying a valve which co-operates with a complementary valve seat within the valve body, said spindle being rotatable on the valve body for opening and closing the valve, the radiator valve cap including engagement means for operably engaging with an outer end of the valve spindle, characterised in that said engagement means is adjustable. Advantageously the radiator valve cap of the invention can be readily easily fitted to a range of valve spindles by manual adjustment of the engagement means when fitting the radiator valve cap on the radiator valve.

In one embodiment of the invention the engagement means includes spindle gripping means mounted on the cap and movable on the cap between an open release position and a closed spindle gripping position.

In a preferred embodiment the spindle gripping means is a pair of spindle gripping jaws mounted on the cap.

In one embodiment the jaws are slidabily mounted on the cap for movement between the open and the closed positions. In another embodiment the jaws are pivotally mounted on the cap for movement between the open and closed positions.

In a further embodiment actuating means is provided for movement of the spindle gripping means on the cap.

In another embodiment the actuating means comprises a wedge element which is slidabily mounted on the cap and is engagable with the jaws to urge the jaws towards the closed position.

In another embodiment the jaws are spring biased apart towards the open position.

In another embodiment the cap has a socket within which the spindle engagement means is mounted.

In a further embodiment the jaws are retained at an inner end of the socket by the wedge element.

In another embodiment an upper face of each jaw engages with an inner end of the socket.

In a further embodiment the upper face of the jaw and an inwardly facing inner grip face of the jaw are mutually perpendicular.

In another embodiment each jaw and the wedge element have slidable engaging mating parts, at least one of which is tapered. Preferably the jaws each have a tapered outer edge for co-operation with an associated tapered inner face of the wedge element, an outer face of the wedge element being slidabily engageable with an inner side-wall of the socket.

In another embodiment a sleeve element is provided for mounting between an inner bore of the socket and an exterior of the valve body to support the cap on the valve body.

In another embodiment the sleeve element has an outer side wall which is slidably engageable with the inner side wall of the socket.

In a preferred embodiment the sleeve has a tapered inner bore. This conveniently facilitates mounting the sleeve on a number of different valve body constructions for added adaptability.

In a further embodiment inwardly projecting ribs are provided on the taper inner bore of the sleeve.

In another embodiment the socket has a stepped bore with an outer portion for reception of an engagement of the sleeve and an inner portion for reception of the adjustable spindle gripping means.

Conveniently a plurality of tapered sleeves are provided to facilitate mounting the cap on a number of different sized radiator valves on which the radiator valve cap of the invention can be used.

Conveniently a set of the sleeve elements of different sizes may be interconnected by frangible links.

The invention will be more clearly understood by the following description of some embodiments thereof given by way of example only, with reference to the accompanying drawings, in which;
Fig. 1 is an exploded sectional elevational view of a radiator valve cap according to the invention;
Fig. 2 is a sectional elevational view of the radiator valve cap of the invention, shown mounted on a radiator valve;
Fig. 3 is an elevational view of a body of the radiator valve cap;
Fig. 4 is a sectional elevational view of the body;
Fig. 5 is an underneath plan view of the body;
Fig. 6 is a plan view of the body;
Fig. 7 is another plan view of the body;
Fig. 8 is a detail elevational view of a gripper jaw forming portion of the valve cap;
Fig. 9 is a sectional elevational view of the gripper jaw;
Fig. 10 is a side elevational view of the gripper jaw;
Fig. 11 is a sectional elevational view of a set of spacer sleeves forming portion of the radiator valve cap assembly;
Fig. 12 is an end elevational view of the spacer sleeve set shown in Fig. 11; and
Fig. 13 is an end elevational view of the spacer sleeve set shown in Fig. 11.

Referring to the drawings, there is illustrated a radiator valve cap assembly according to the invention indicated generally by the reference numeral 1 for a radiator valve indicated generally by the reference numeral 2. The radiator valve 2 has a valve body 3 with an outwardly extending valve operating spindle 4 an outer end which has flats 5, 6 for gripping by an adjustable spindle gripping means 7 of the cap 1 which engages with an outer end of the spindle 4 so that the cap 1 is operable to turn the spindle 4 and operate a valve mounted on the spindle 4 within the valve body 3 to open and to close the radiator valve 2.

The cap 1 has a body 8 with a generally tubular side wall 9 closed at one end by a top end wall 10 and defining a socket 11 within which the gripping means 7 is housed. A central stepped through hole 12 is provided in the top wall 10 for reception and mounting of a self tapping screw 14 which engages and operates the spindle gripping means 7 as will be later described.

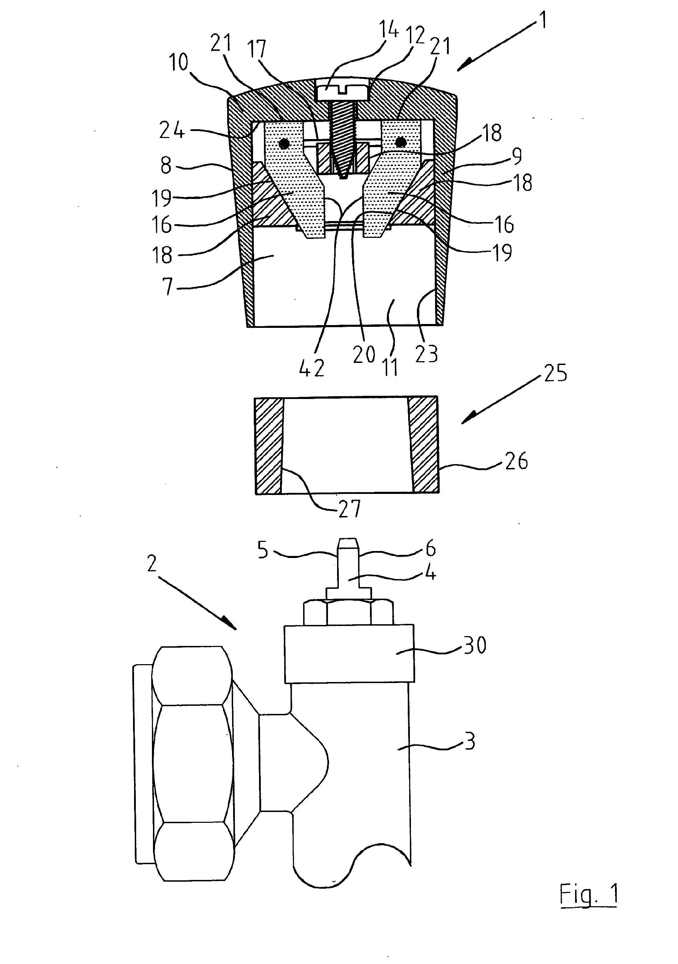

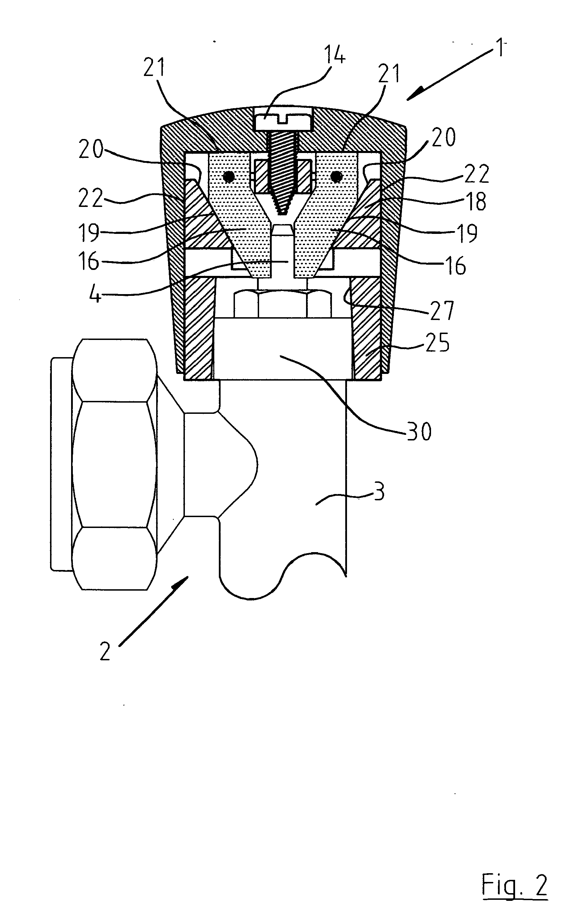

The spindle gripping means 7 comprises a pair of spaced-apart jaws 16 which are interconnected at their upper ends by a semi-circular spring clip 17. The jaws 16 cooperate with a complementary wedge element 18 for movement of the jaws 16 between an open release position shown in Fig. 1and a closed spindle gripping position as shown in Fig. 2. Each jaw 16 has an inclined or tapered outer edge face 19 which slidabily engages with a complementary inclined or tapered inner face 20 of the wedge element 18. An upper face or edge 21 of each jaw 16 abuts against an inside face 24 of the top wall 10 of the cap body 8. An outer face 22 of the wedge element 18 slidabily engages with an inner side wall 23 of the socket 11. The screw 14 can be screwed into the wedge element 18 to pull the wedge element 18 inwardly towards the top wall 10 and this urges the jaws 16 inwardly towards each other to grip the flats 5, 6 at the outer end of the valve spindle 4 by means of flat inwardly facing grip faces 42 at a lower end of each jaw 16 as shown in Fig. 2.

A tubular spacer sleeve 25 is provided for mounting between the valve body 3 and the cap 1as shown in Fig. 2. The spacer sleeve 25 has a cylindrical outer side wall 26 and a tapered inner bore 27 which is wider at the bottom. The spacer sleeve 25 is mounted on an upper portion 30 of the valve body 3. Tapering of the bore 27 accommodates valve body portions 30 of different size. The sleeve 25 essentially supports the cap body 8 at its lower end to provide for snug engagement of the cap assembly 1 on the valve 2, with the inner side wall 23 of the socket 11 slidably engaging the outer wall 26 of the sleeve 25.

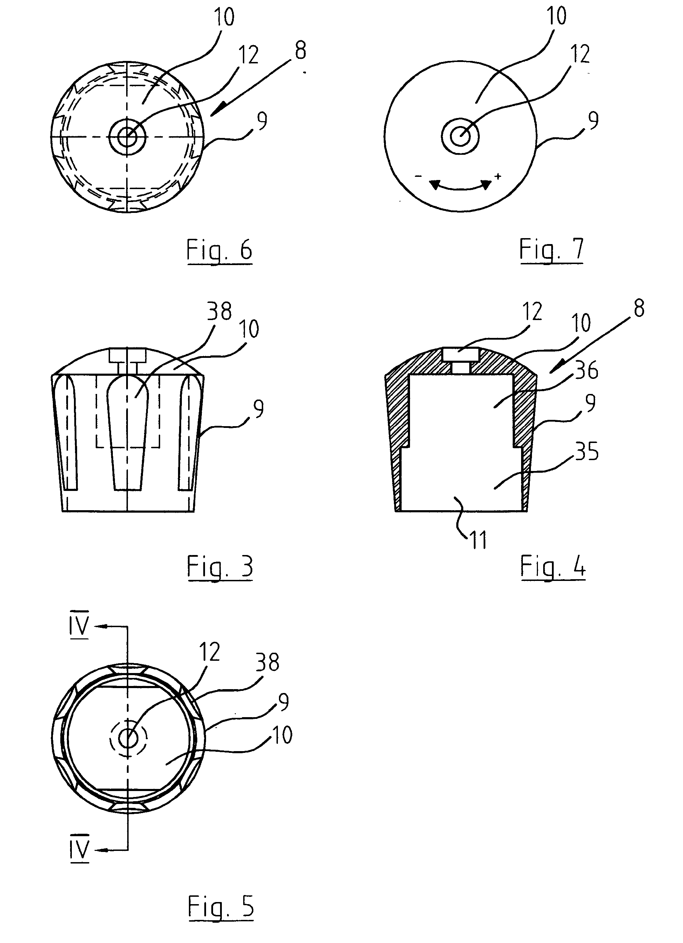

Figs. 3 to 7 inclusive show the cap body 8 in more detail. As shown in Fig. 4 the socket 11 may have a stepped bore with an outer portion 35 for reception of the sleeve 25 and an inner portion 36 of narrower diameter for reception of the wedge element 18 and spindle gripping means 7 generally. Ribs or grooves 38 may be provided on an exterior of the side wall 9 for improved hand grip.

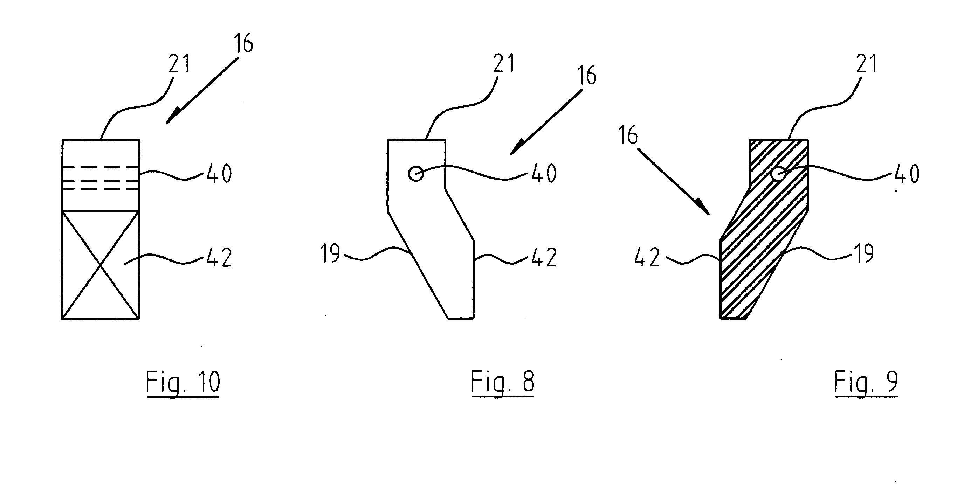

Figs 8 to 10 show a jaw 16. The jaw 16 has a through hole 40 at its upper end for engagement by the spring clip 17. A flat inner grip face 42 is provided at a lower end of the jaw 16 for gripping the flats 5, 6 of the valve spindle 4. As this inner grip face 42 is substantially perpendicular relative to the upper face or edge 21 it is supported in an upright orientation within the cap 1.

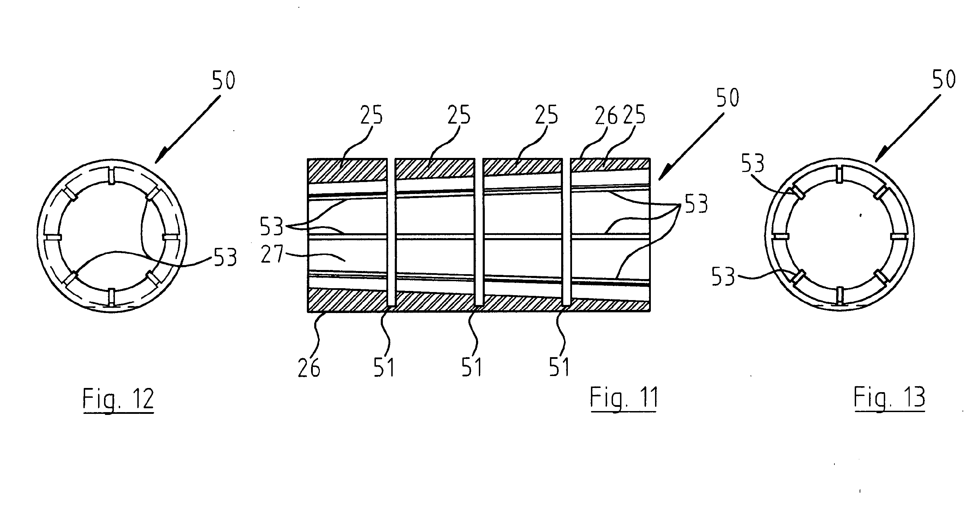

Figs. 11 to 13 inclusive show a set of spacer sleeves 25, this set being indicated generally by the reference numeral 50. The set 50 essentially comprises a number of the sleeves 25 arranged in line interconnected by frangible links 51. The sleeves 25 have internal tapered bores 27 of different width to facilitate engagement with valve body portions 30 of different size for mounting the cap body 8 on valve bodies 3 of different sizes. Ribs 53 are provided within the tapered bore 27 of each sleeve 25 and deform on engagement of the sleeve 25 with the valve body portion 30 for improved grip and secure mounting of the sleeve 25 on the valve body portion 30.

In use, the required sleeve 25 appropriate to the radiator valve 2 on which the cap assembly 1 is to be mounted is chosen from the set 50 and mounted on the valve body portion 30 of the valve body 3. The cap body 8 containing the spindle gripping means 7 as shown in Fig. 1 is then mounted on the sleeve 25 and pushed downwardly on to the sleeve 25 with the jaws 16 at either side of the flats 5, 6 on the end of the valve spindle 4. The screw 14 is then turned to pull up the wedge element 18 urging the jaws 16 inwardly to grip the flats 5, 6 on the spindle 4. As the tapered inner face 20 of the wedge element 18 slides upwardly along the tapered outer edge face 19 of each jaw 16 this causes the upper edge 21 of each jaw 16 to slide inwardly along the inside face 24 of the top wall 10 of the cap body 8. The cap assembly 1 is thus securely mounted on the radiator valve 2 and can be manually turned to turn the spindle 4 for opening and closing the radiator valve 2.

It will be appreciated that the valve assembly 1 of the present invention is readily easily adaptable to accommodate a range of radiator valve sizes and spindle sizes and it is easily securely mounted on the valve spindle.

The invention is not limited to the embodiments hereinbefore described which may be varied in both construction and detail within the scope of the appended claims.

## Claims

1. A radiator valve cap (1) for a radiator valve (2) of the type comprising a valve body (3) with a valve spindle (4) rotatably mounted on the valve body (3) and projecting outwardly therefrom, said spindle (4) carrying a valve which co-operates with a complementary valve seat within the valve body (3), said spindle (4) being rotatable on the valve body (3) for opening and closing the valve (2), the radiator valve cap (1) including engagement means (7) for operably engaging with an outer end of the valve spindle (4), **characterised in that** said engagement means (7) is adjustable.

2. A radiator valve cap (1) as claimed in claim 1 wherein the engagement means includes spindle gripping means (7) mounted on the cap (1) and movable on the cap (1) between an open release position and a closed spindle gripping position.

3. A radiator valve cap (1) as claimed in claim 2 wherein the spindle gripping means (7) is a pair of spindle gripping jaws (16) mounted on the cap (1).

4. A radiator valve cap (1) as claimed in claim 3 wherein the jaws (16) are slidably mounted on the cap (1) for movement between the open and the closed positions.

5. A radiator valve cap (1) as claimed in claim 3 wherein the jaws (16) are pivotally mounted on the cap (1) for movement between the open and closed positions.

6. A radiator valve cap (1) as claimed in any of claims 2 to 5 wherein actuating means (18) is provided for movement of the spindle gripping means (7) on the cap (1).

7. A radiator valve cap (1) as claimed in claim 6 wherein the actuating means comprises a wedge element (18) which is slidabily mounted on the cap (1) and is engagable with the jaws (16) to urge the jaws towards the closed position.

8. A radiator valve cap (1) as claimed in any of claims 3 to 7 wherein the jaws (16) are spring (17) biased apart towards the open position.

9. A radiator valve cap (1) as claimed in any preceding claim wherein the cap (1) has a socket (11) within which the spindle engagement means (7) is mounted.

10. A radiator valve cap (1) as claimed in claim 9 wherein the jaws (16) are retained at an inner end of the socket (11) by the wedge element (18).

11. A radiator valve cap (1) as claimed in claim 9 or claim 10 wherein an upper face (21) of each jaw (16) engages with an inner end (24) of the socket (11).

12. A radiator valve cap (1) as claimed in claim 11 wherein the upper face (21) of the jaw (16) and an inwardly facing inner grip face (42) of the jaw (16) or mutually perpendicular.

13. A radiator valve cap (1) as claimed in any of claims 7 to 12 wherein each jaw (16) and the wedge element (18) have slidably engaging mating parts (19, 20) at least one of which is tapered.

14. A radiator valve cap (1) as claimed in claim 13 wherein the jaws (16) each have a tapered outer edge (19) for co-operation with an associated tapered inner face (20) of the wedge element (18), an outer face (22) of the wedge element (18) being slidabily engageable with an inner side-wall (23) of the socket (11).

15. A radiator valve cap (1) as claimed in any of claims 9 to 14 wherein a sleeve element (25) is provided for mounting between an inner bore of the socket (11) and an exterior of the valve body (3) to support the cap (1) on the valve body (3).

16. A radiator valve cap (1) as claimed in claim 15 wherein the sleeve element (25) has an outer side wall (26) which is slidably engageable with the inner side wall (23) of the socket (11).

17. A radiator valve cap (1) as claimed in claim 15 or claim 16 wherein the sleeve element (25) has a tapered inner bore (27).

18. A radiator valve cap (1) as claimed in any of claims 14 to 17 wherein inwardly projecting ribs (53) are provided on the tapered inner bore (27) of the sleeve (25).

19. A radiator valve cap (1) as claimed in any of claims 15 to 18 wherein the socket (11) has a stepped bore with an outer portion (35) for reception of and engagement with the sleeve element (25) and an inner portion (36) for reception of the adjustable spindle gripping means (7).

20. A radiator valve cap (1) as claimed in any of claims 15 to 19 wherein a plurality of tapered sleeve elements (25) are provided to facilitate mounting the cap (1) on a number of different sized radiator valves (2).

21. A radiator valve cap (1) as claimed in claim 20 wherein said sleeve elements (25) are interconnected by frangible links (51).
